# Europäisches Patentamt

(19) **European Patent Office**

**Office européen des brevets**

(11) Veröffentlichungsnummer: **0 245 612**
**B1**

(12) **EUROPÄISCHE PATENTSCHRIFT**

(45) Veröffentlichungstag der Patentschrifft:
07.02.90

(51) Int. Cl. ⁵: **B 62 D 1/18**

(21) Anmeldenummer: **87103879.0**

(22) Anmeldetag: **17.03.87**

(54) **Lenksäulenbefestigung für ein Kraftfahrzeug.**

(30) Priorität: **14.05.86 DE 3616246**

(43) Veröffentlichungstag der Anmeldung:
**19.11.87 Patentblatt 87/47**

(45) Bekanntmachung des Hinweises auf die Patenterteilung:
**07.02.90 Patentblatt 90/06**

(84) Bennante Vertragsstaaten:
**DE ES FR GB IT NL SE**

(56) Entgegenhaltungen:
**DE-A-1 963 334**
**DE-A-2 753 383**
**DE-A-2 814 145**
**DE-A-2 821 707**
**DE-A-2 853 374**

(73) Patentinhaber: **Dr.Ing.h.c. F. Porsche Aktiengesellschaft**
**Porschestrasse 42**
**D-7000 Stuttgart 40 (DE)**

(72) Erfinder: **Wierschem, Franz-Rudolf, Dipl.-Ing. FH**
**Habichtstrasse 8**
**D-7251 Weissach (DE)**

LIBERGRAF, STOCKHOLM 1990

# EP 0 245 612 B1

## Beschreibung

Die Erfindung bezieht sich auf eine Lenksäulenbefestigung für ein Kraftfahrzeug nach dem Oberbegriff des Anspruchs 1.

Aus der DE-A-2 814 145 ist eine Lenksäulenbefestigung bekannt, die eine Einrichtung zur Energieabsorption bei Zusammenstößen über ein Deformationselement umfaßt. Dieses besteht aus einer Platte mit zickzackförmigen Abschnitten, welche auf einem mit dem Lenkschutzrohr verbundenem Bügel gehalten und an einer Lenkkonsole befestigt ist. Bei einem Zusammenstoß erfolgt durch das Einwirken der Bolzen auf das Deformationselement eine plastische Verformung dieses Elements. Diese bekannte Vorrichtung besteht jedoch aus einer großen Anzahl von zueinander ausrichtbaren Einzelteilen, die aufwendig zu montieren sind und aufgrund der möglichen Freiheitsgrade der Einzelteile keine sichere Halterung der Lenksäule am Fahrzeugaufbau gewährleisten.

Die Aufgabe der Erfindung ist es, eine ein Deformationselement umfassende Lenksäulenbefestigung zu schaffen, die bei einfacher Konstruktion aus wenigen, unaufwendig zu fertigenden Einzelteilen besteht und eine sichere Befestigung der Lenksäule am Fahrzeugaufbau gewährleistet.

Diese Aufgabe wird erfindungsgemäß durch die kennzeichnenden Merkmale des Anspruchs 1 gelöst. Weitere vorteilhafte Ausbildungen der Erfindung beinhalten die Unteransprüche.

Bei der erfindungsgemäßen Lenksäulenbefestigung braucht diese lediglich als Deformationselement ausgeführt zu sein, wobei dessen plattenförmige Ausbildung den Vorteil eines geringen Bauraumes hat. Darüber hinaus wird das Deformationselement aus wenigen Teilen gebildet, die außerhalb zusammengebaut und dann in einfacher Weise am Fahrzeug montierbar sind.

Durch das in geeigneter Weise aus einer relativ dünnen metallischen Platte bestehende Deformationselement mit schlitzartigen Verformungsabschnitten kann dieses Element ohne wesentliche Spannungskonzentration einen ausreichenden Verformungsweg aufnehmen und das Element wird infolge eines Zusammenstoßes eine stufenweise fortschreitende Energieabsorption bewirken.

Durch die zusätzliche Anordnung einer Tellerfeder zwischen dem Kopf des Verdrängungsbolzens und dem Bügel wird die axiale Festlegungskraft des Bolzens definiert und der Verformungsweg entsprechend beeinflußt.

Ein Ausführungsbeispiel der Erfindung ist in der Zeichnung dargestellt und wird im folgenden näher beschrieben. Es zeigt

Fig. 1    eine Seitenansicht einer Lenkanlage mit einem Deformationselement,

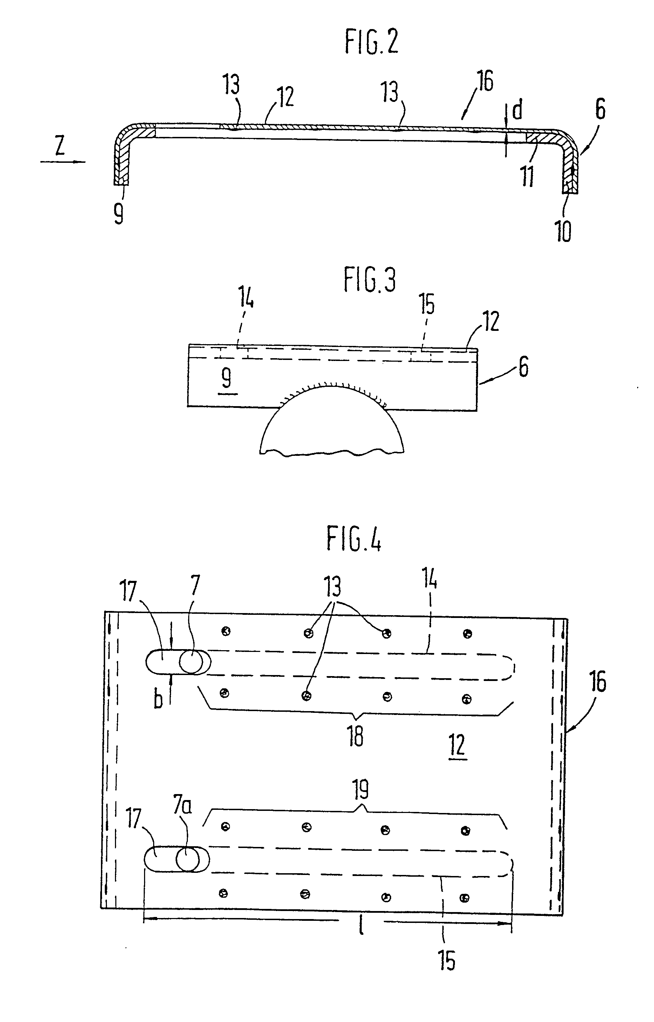

Fig. 2    eine vergrößerte Darstellung des mit einem Bügel verbundenen plattenartigen Deformationselements im Schnitt,

Fig. 3    eine Ansicht in Pfeilrichtung Z, auf Fig. 2 gesehen,

Fig. 4    eine Draufsicht zu Fig. 2,

Fig. 5    eine vergrößerte Darstellung der Verdrängungsbolzen mit Tellerfeder, und

Fig. 6    eine schaubildliche Darstellung einer plastisch deformierten Platte des Elements nach einem Zusammenstoß.

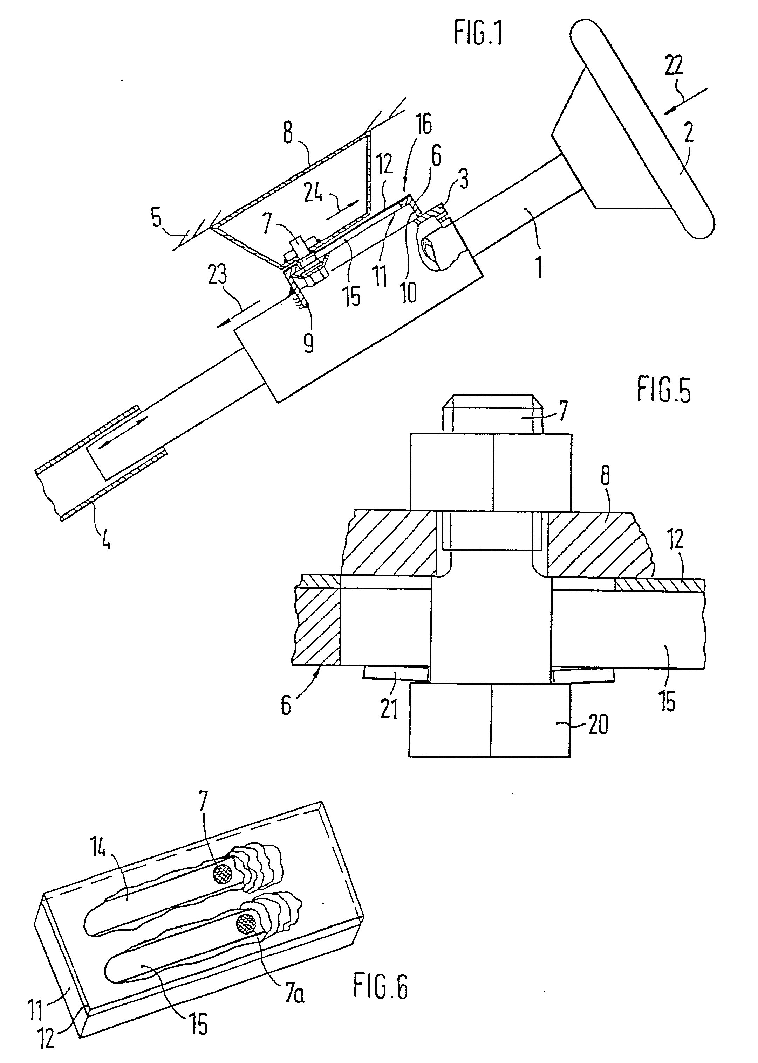

Die in Fig. 1 dargestellte Lenkeinrichtung besitzt eine Lenkwelle 1, die an ihrem oberen Ende mit einem Lenkrad 2 und an ihrem unteren Ende mit einem Lenkgetriebe (nicht gezeigt) verbunden ist und in einem Lenkschutzrohr 3 drehbar ist. Die Lenkwelle 1 ist in Längsrichtung relativ zu einem verschiebbaren Teil 4 gehalten. Die Befestigung der Lenkeinrichtung am Fahrzeugaufbau 5 erfolgt über einen mit dem Lenkschutzrohr 3 verbundenen Bügel 6, der mittels Verdrängungsbolzen 7, 7a an einer Lenkkonsole 8 gehalten wird.

Der Bügel 6 besteht aus einem U-förmigen Profil, dessen Schenkel 9, 10 mit dem Lenkschutzrohr durch eine Schweißung fest verbunden sind. Auf den Steg 11 des Bügels 6 ist eine relativ dünne, ein Deformationselement 16 bildende metallische Platte 12 angeordnet, die durch eine Punktschweißung 13 am Bügel 6 befestigt wird.

Der Bügel 6 weist zwei in Achsrichtung der Lenkwelle 1 verlaufende Langlöcher 14 und 15 auf, die vorzugsweise parallel zueinander angeordnet sind. Diese werden obenseitig von der Platte 12 abgedeckt. Die Verdrängungsbolzen 7, 7a sind durch in der Platte 12 angeordnete Langlochöffnungen 17 und durch die darunter angeordneten Langlöcher 14, 15 hindurchgeführt und unter Abstützung an einer Innenfläche des Bügels 6 durch Muttern an der Lenkkonsole 8 befestigt. Zur variablen Einstellung der Reibung weist der Bolzen 7, 7a zwischen seinem Kopf 20 und dem Steg 11 des Bügels 6 eine Tellerfeder 21 auf (Fig. 5). Die korrespondierend mit den Langlöchern 14 und 15 angeordneten Bereiche der Platte 12 des Deformationselements 16 bilden schlitzartige Verformungsabschnitte 18 und 19.

Wenn die Lenkwelle 1 einer in Fig. 1 in Pfeilrichtung 22 gerichteten Kraft ausgesetzt wird, bewegt sich der Bügel 6 mit dem Lenkschutzrohr 3 in Pfeilrichtung 23. Das auf dem Bügel 6 befestigte Material der Platte 12 wird im Bereich der Langlöcher 14, 15 über die Verdrängungsbolzen 7 und 7a an den seitlichen Begrenzungen der Langlöcher 14, 15 aufgetrennt und plastisch in Pfeilrichtung 24 verformt, wie Fig. 6 näher zeigt.

Das gezeigte Deformationselement 16 kann auch in der Weise ausgestaltet sein, daß mehr als zwei Verdrängungsbolzen 7, 7a verwendet werden. Auch ist es denkbar, daß mehrere, in Längsrichtung versetzt zueinander angeordnete Bolzen vorgesehen sind. Die Platte 12 könnte zum Erzielen eines veränderlichen Deformationsverhaltens über die Länge auch eine unterschiedliche Dicke aufweisen bzw. es können verschiedene Materialien verwendet werden.

2

**Patentansprüche**

1. Lenksäulenbefestigung für ein Kraftfahrzeug, mit einem energieaufnehmenden Deformationselement, das zwischen einer aufbauseitig gehaltenen Lenkkonsole (8) und einem Lenkschutzrohr (3) angeordnet und in einem Langlöcher (14, 15) aufweisenden Bügel (6) des Lenkschutzrohres gehalten und über durch die Langlöcher (14, 15) ragenden Bolzen (7, 7a) mit der Lenkkonsole (8) verbunden ist, dadurch gekennzeichnet, daß das Deformationselement (16) aus einer mit dem Bügel (6) verbundenen Platte (12) besteht, wobei die Bereiche der Platte (12), die die Langlöcher (14, 15) überdecken, schlitzartige Verformungsabschnitte (18, 19) bilden, welche bei Zusammenstößen über die Bolzen (7, 7a) an den seitlichen Begrenzungen der Langlöcher (14, 15) aufgetrennt und plastisch verformbar sind.

2. Lenksäulenbefestigung nach Anspruch 1, dadurch gekennzeichnet, daß die Platte (12) auf dem der Lenkkonsole (8) zugerichteten Steg (11) des Bügels (6) angeordnet ist und die in Achsrichtung der Lenkwelle (1) verlaufenden Verformungsabschnitte (18, 19) jeweils eine Langlochöffnung (17) für die Verdrängungsbolzen (7, 7a) umfassen, welche an einem dem Lenkrad (2) abgekehrten Ende des Bügels (6) vorgesehen sind.

3. Lenksäulenbefestigung nach den Ansprüchen 1 oder 2, dadurch gekennzeichnet, daß die Platte (12) aus einem metallischen Werkstoff besteht und eine auf das Deformationsverhalten definiert abgestimmte Dicke (d), Breite (b) und Längs (1) der Verformungsabschnitte (18, 19) aufweist.

4. Lenksäulenbefestigung nach einem oder mehreren der vorhergehenden Ansprüche, dadurch gekennzeichnet, daß die Verdrängungsbolzen (7, 7a) zwischen dem Steg (11) des Bügels (6) und dem Bolzenkopf (20) jeweils eine Tellerfeder (21) aufweisen.

**Claims**

1. A steering column attachment for a motor vehicle, having an energy-absorbing deformation member, which is arranged between a steering bracket (8) mounted on the bodywork and a steering protection tube (3) and is held in a shackle (6) of the steering protection tube having elongate holes (14, 15) and is connected to the steering bracket (8) by way of pins (7, 7a) projecting through the elongate holes (14, 15), characterized in that the deformation element (16) comprises a plate (12) connected to the shackle (6), the areas of the plate (12) which cover the elongate holes (14, 15) forming slot-like deformation portions (18, 19) which in the event of collision are separated by means of the pins (7, 7a) at the lateral boundaries of the elongate holes (14, 15) and are plastically deformable.

2. A steering column attachment according to Claim 1, characterized in that the plate (12) is mounted on the web (11) of the shackle (6) facing the steering bracket (8), and the deformation portions (18, 19) extending in the axial direction of the steering shaft (1) each comprise an elongate hole opening (17) for the displacement pins (7, 7a) which are provided on an end of the shackle (6) remote from the steering wheel (2).

3. A steering column attachment according to Claim 1 or 2, characterized in that the plate (12) consists of an metallic material and has a thickness (d), width (b) and length (1) of the deformation portions (18, 19) adapted in a defined manner to the deformation behaviour.

4. A steering column attachment according to one or more of the preceding Claims, characterized in that the displacement pins (7, 7a) between the web (11) of the shackle (6) and the head (20) of the pin each comprise a dished spring (21).

**Revendications**

1. Fixation de colonne de direction pour un véhicule automobile comportant un élément de déformation absorbant de l'énergie, qui est disposé entre une console de direction (8) maintenue du côté de la carrosserie et un tube protecteur de direction (3), et maintenu dans un étrier (6) du tube protecteur de direction, présentant des trous oblongs (14, 15), et relié à la console de direction (8) par l'intermédiaire de boulons (7, 7a) passant par les trous oblongs (14, 15), caractérisée en ce que l'élément de déformation (16) se compose d'une plaque (12) reliée à l'étrier (6), les zones de la plaque (12) qui recouvrent les trous oblongs (14, 15) formant des parties de déformation (18, 19) en forme de fentes, qui, en cas de collisions, sont découpées et déformées plastiquement sur les limites latérales des trous oblongs (14, 15) par l'intermédiaire des boulons (7, 7a).

2. Fixation de colonnes de direction selon la revendication 1, caractérisée en ce que la plaque (12) est disposée sur la nervure (11) de l'étrier (6) qui est tournée vers la console de direction (8), et que les parties de déformation (18, 19) s'étendant dans le sens de l'axe de l'arbre de direction (1) comportent à chaque fois une ouverture de trou oblong (17) destinée aux boulons d'enfoncement (7, 7a) qui sont prévus sur une extrémité de l'étrier tournée vers le volant de direction (2).

3. Fixation de colonnes de direction selon les revendications 1 ou 2, caractérisée en ce que la plaque (12) se compose d'un matériau métallique, et présente une épaisseur (d), une largeur (b) et une longueur (1) des parties de déformation (18, 19) déterminées, définies en fonction du comportement en déformation.

4. Fixation de colonnes de direction selon une ou plusieurs des revendications précédentes, caractérisée en ce que les boulons d'enfoncement (7, 7a) présentent à chaque fois un ressort à disque (21) entre la nervure (11) de l'étrier (6) et la tête de l'axe (20).

FIG.1

FIG.5

FIG.6

FIG.2

FIG.3

FIG.4

3